# EUROPÄISCHE PATENTSCHRIFT

(11) **EP 1 954 431 B1**
(45) Veröffentlichungstag und Bekanntmachung des Hinweises auf die Patenterteilung: **12.06.2013**
(21) Anmeldenummer: 06761649.0
(22) Anmeldetag: 14.06.2006
(51) Int. Cl.: B23B 31/26

(54) **VORRICHTUNG ZUM BETRIEB EINER BETÄTIGUNGSEINHEIT**
DEVICE FOR OPERATING AN ACTUATION UNIT
DISPOSITIF PERMETTANT DE FAIRE FONCTIONNER UNE UNITE D'ACTIONNEMENT

(30) Priorität: 13.09.2005 DE 102005043722; 10.10.2005 DE 102005048800
(43) Veröffentlichungstag der Anmeldung: 13.08.2008
(73) Patentinhaber: Röhm GmbH, 89567 Sontheim (DE)
(72) Erfinder: HANGLEITER, Eugen, 89268 Hermaringen (DE)
(74) Vertreter: Hentrich, Swen
(86) Internationale Anmeldenummer: PCT/DE2006/001017
(87) Internationale Veröffentlichungsnummer: WO 2007/031046

(56) Entgegenhaltungen:
- EP-A- 1 455 118
- WO-A-03/049898
- DE-A1- 19 618 610
- GB-A- 761 157
- US-A- 3 568 566

## Beschreibung

Die Erfindung ist gebildet durch eine Vorrichtung zur Durchführung eines Verfahrens zum Betrieb einer Betätigungseinheit, die dem Spannen und Lösen einer Spannvorrichtung mit einem in einer Maschinenspindel axial verstellbaren Zugbolzen zur Betätigung eines mit Spannklauen zusammenwirkenden Spannkopfes dient, wobei anfänglich durch die Betätigungseinheit zum Spannen in einer axialen Spannrichtung eine Kraft auf den Zugbolzen ausgeübt wird, bis dessen axiale Lage mittels Selbsthemmung gegenüber der Maschinenspindel festgelegt ist, bei dem nach dem Erreichen der Selbsthemmung die Kraftwirkung in Spannrichtung der Betätigungseinheit auf den Zugbolzen beendet wird und während des Arbeitseinsatzes der Spannvorrichtung unterbunden bleibt, und bei dem zum Lösen der Einspannung der Zugbolzen durch die Betätigungseinheit in die der Spannvorrichtung entgegengesetzte Lösevorrichtung verstellt wird, wobei eine Spannvorrichtung mit dem in der Maschinenspindel axial verstellbar gelagerten Zugbolzen zur Betätigung eines mit Spannklauen zusammenwirkenden Spannkopfes vorgesehen ist, bei der die axiale Lage des Zugbolzens in der Spannstellung durch Selbsthemmung gesichert ist und eine Betätigungseinheit vorgesehen ist, die in der Spannstellung des Zugbolzens kraftschlüssig von diesem entkoppelt ist, wobei die Betätigungseinheit in der Spannstellung des Zugbolzens gegenüber diesem berührungslos positioniert ist, dadurch gekennzeichnet, dass dem Zugbolzen eine erste Spulenwicklung zugeordnet ist, die zum Zusammenwirken mit einer der Maschinenspindel zugeordneten, koaxialen zur ersten Spulenwicklung angeordneten, zweiten Spulenwicklung vorgesehen ist, wobei die zweite Spulenwicklung berührungslos mit einem dem stationären Betätigungsgehäuse zugeordneter Stator gekoppelt ist, so dass ein Linearmotor realisiert ist, bei dem durch unterschiedliche Stromrichtung die Verstellung des Zugbolzens in die Spannrichtung oder die Löserichtung bewirkt werden kann sowie durch eine Vorrichtung zur Durchführung eines Verfahrens zum Betrieb einer Betätigungseinheit, die dem Spannen und Lösen einer Spannvorrichtung mit einem in einer Maschinenspindel axial verstellbaren Zugbolzen zur Betätigung eines mit Spannklauen zusammenwirkenden Spannkopfes dient, wobei anfänglich durch die Betätigungseinheit zum Spannen in einer axialen Spannrichtung eine Kraft auf den Zugbolzen ausgeübt wird, bis dessen axiale Lage mittels Selbsthemmung gegenüber der Maschinenspindel festgelegt ist, bei dem nach dem Erreichen der Selbsthemmung die Kraftwirkung in Spannrichtung der Betätigungseinheit auf den Zugbolzen beendet wird und während des Arbeitseinsatzes der Spannvorrichtung unterbunden bleibt, und bei dem zum Lösen der Einspannung der Zugbolzen durch die Betätigungseinheit in die der Spannvorrichtung entgegengesetzte Lösevorrichtung verstellt wird, wobei eine Spannvorrichtung mit dem in der Maschinenspindel axial verstellbar gelagerten Zugbolzen zur Betätigung eines mit Spannklauen zusammenwirkenden Spannkopfes vorgesehen ist, bei der die axiale Lage des Zugbolzens in der Spannstellung durch Selbsthemmung gesichert ist und eine Betätigungseinheit vorgesehen ist, die in der Spannstellung des Zugbolzens kraftschlüssig von diesem entkoppelt ist, wobei die Betätigungseinheit in der Spannstellung des Zugbolzens gegenüber diesem berührungslos positioniert ist, wobei der Zugbolzen einen Ringbund aufweist, der in einer Kolbenkammer eines ersten Kolbens angeordnet ist, der in einer mittels eines Druckmittels beaufschlagbaren Zylinderkammer der Betätigungseinheit angeordnet ist, der Verstellweg des ersten Kolbens in der Zylinderkammer aus der Mittenstellung in beide Richtungen größer ist als der Verstellweg des Ringbundes in der Kolbenkammer in beide Verstellrichtungen, wobei in der Betätigungseinheit in einer zweiten Zylinderkammer ein zweiter Kolben angeordnet ist, der in der Spannstellung des Zugbolzens den ersten Kolben beaufschlagt, dadurch gekennzeichnet, dass der zweite Kolben einen größeren wirksamen Durchmesser als der erste Kolben hat, und dass über ein Drei-Wegeventil die einander abgewandten Seiten des ersten Kolbens und des zweiten Kolbens in der Spannstellung des Zugbolzens mit dem gleichen Druck beaufschlagt sind.

Aus dem Stand der Technik, beispielsweise der DE 10040638 A1, sind Spannvorrichtungen bekannt, die dazu dienen, mittels Spannzangen Werkstücke, die beispielsweise einen Hohlschaftkegel aufweisen, zu spannen. Zur Betätigung derartiger Spannvorrichtungen werden auch als Löseeinheiten bezeichnete Betätigungseinheiten eingesetzt, die einen der Spannvorrichtung zugeordneten Zugbolzen axial verstellen, wobei für das Spannen des Werkstückes der Zugbolzen in die von der Spannzange abgewandte Richtung gezogen und unter Aufbringung der dazu erforderlichen Spannkraft von der Betätigungseinheit in dieser Lage gehalten wird, wobei die lagerrichtige Positionierung des Zugbolzens durch Tellerfederpakete oder Schraubentellerfedern unterstützt wird. Soll die Einspannung wieder beendet werden, wird durch die Betätigungseinheit der Zugbolzen in die entgegengestzete Richtung verstellt. Derartige Spannvorrichtungen mit zugeordneten Betätigungseinheiten sowie die zu deren Betrieb erforderlichen Verfahren haben sich in der Praxis bewährt, jedoch stößt der bekannte Stand der Technik an seine Grenzen, wenn mit zunehmenden Drehzahlen der Maschinenspindel die Auswuchtqualität immer weiter gesteigert werden muss, wobei insbesondere die Tellerfederpakete oder Schraubentellerfedern mit deren erforderlicher permanenter Beaufschlagung des Zugbolzens sich nachteilig auswirken.

Aus der US 3 568 566 ist eine Vorrichtung mit den Merkmalen des Oberbegriffs von Anspruch 1 bekannt. Bei dieser Vorrichtung wird in der Spannstellung der Spannzustand eines Zugbolzens durch Selbsthemmung gesichert, wobei eine Betätigungsspindel in der Spannstellung des Zugbolzens kraftschlüssig von diesem entkoppelt ist.

Die WO 03/049898 A1 offenbart die Realisierung der Selbsthemmung des Zugbolzens durch den Ersatz selbsthemmender Gewinde.

Eine Vorrichtung mit den Merkmalen aus dem Oberbegriff des Anspruchs 2 ist aus DE 196 18 610 A1 bekannt, bei der eine zusätzliche Halteeinrichtung zwischen Spindel und Zugstange vorhanden ist, die aus einer über die Feder vorgespannte Spreizhülse oder aus einer Klemmeinrichtung besteht, die auf einen Kegel der Zugstange wirkt.

Der Erfindung liegt daher die Aufgabe zugrunde, eine Vorrichtung bereit zu stellen, bei der die Verstellung des Zugbolzens aus jedem Betriebszustand stets sicher gewährleistet ist.

Diese Aufgabe wird durch die eingangs genannte Vorrichtung erster Alternative gelöst. Mit dieser ist ein Verfahren ausführbar, das sich dadurch auszeichnet, dass eine Kraftwirkung auf den Zugbolzen nur zum Spannen und zum Lösen ausgeübt werden muss, während die Betätigungseinrichtung während des Arbeitseinsatzes der Spannvorrichtung an der mit hoher Drehzahl rotierenden Maschinenspindel keine Kraft auf den Zugbolzen ausüben muss. Dabei ist zu beachten, dass zur Verkürzung der Umrüstzeiten beispielsweise für einen Werkzeugwechsel auch die Möglichkeit besteht, dass beim Spannen nach dem Erreichen der Selbsthemmung die Kraftwirkung während des Anlaufens der Maschinenspindel reduziert wird, dass also die Maschinenspindel bereits anlaufen kann, während die Kraftübertragungskette zum Zugbolzen von der Betätigungseinheit erst unterbunden wird.

Weiterhin ist insbesondere unter Sicherheitsaspekten vorgesehen, dass beim Lösen die Kraftwirkung in Löserichtung erst nach dem Erreichen des Stillstands der Maschinenspindel eingeleitet wird, dass also erst nach dem vorständigen Erreichen des Stillstands der Maschinenspindel die Kraftübertragungskette zwischen der Betätigungseinheit und dem Zugbolzen wieder aufgebaut wird, um Verletzungen oder Beschädigungen durch unzureichend gespannte Werkstücke zu vermeiden.

Die Gestaltung der Vorrichtung ermöglicht insbesondere, dass negative Einflüsse der zur Betätigung des Zugbolzens erforderliche Teile der Betätigungseinheit auf die Auswuchtqualität unterbunden sind und insbesondere die Kopplung des Zugbolzens mit der Betätigungseinheit sich nicht nachteilig auf die Auswuchtqualität auswirkt. Diese Vorteile lassen sich besonders einfach erreichen, da die Betätigungseinrichtung in der Spannstellung des Zugbolzens gegenüber diesem berührungslos positioniert ist, also der freistehende Zugbolzen mit der kompletten Maschinenspindel berührungslos zu dem Betätigungssystem rotieren kann.

Die Aufgabe wird weiterhin durch die eingangs genannte Vorrichtung zweiter Alternative gelöst. Bei dieser Ausführungsform wird im Gegensatz zu der die Spulentwicklungen nutzenden Ausführungsform eine kontaktbehaftete Arbeitsweise zum Spannen und Lösen zugelassen, während sichergestellt ist, dass der Zugbolzen mit seinem Ringbund während des Arbeitseinsatzes der Spannvorrichtung berührungslos gegenüber der Betätigungseinrichtung positioniert ist, da dies das entscheidende Kriterium für das Erreichen der hohen Drehzahlen bei guter Auswuchtqualität ist, währen im Stillstand zum Schalten der Spannvorrichtung ein Kontakt zugelassen werden kann.

Durch die zusätzliche Verstellmöglichkeit des ersten Kolbens kann nicht nur der Kontakt zwischen dem Ringbund mit der Kolbenkammer erzielt werden, sondern darüber hinaus auch die erforderliche Verstellung des Zugbolzens für die Betätigung der Spannvorrichtung.

Für die einwandfreie Funktionsweise dieser Vorrichtung ist es wesentlich, dass die Mittenstellung des Ringbundes in der Kolbenkammer während des Arbeitseinsatzes genau eingehalten wird, wobei diese genau Positionierung allein durch die Steuerung der Druckverhältnisse in der Zylinderkammer nur schwierig zu gewährleisten ist. Durch den Einsatz des zweiten Kolbens lässt sich nun diese Gewährleistung in einfacher Weise erreichen, der in der Spannstellung die korrekte Position des ersten Kolbens und damit des Ringbundes in seiner Kolbenkammer bestimmt.

Da der zweite Kolben einen größeren wirksamen Durchmesser als der erste Kolben hat und über ein Drei-Wegeventil die einander abgewandten Seiten des ersten Kolbens und des zweiten Kolbens in der Spannstellung des Zugbolzens mit dem gleichen Druck beaufschlagt sind, wird in der Spannstellung die korrekte Position des zweiten Kolbens erzielt.

Weiter ist im Rahmen der Erfindung vorgesehen, dass der Betätigungseinrichtung zur Hubkontrolle ein Ringsensor zugeordnet ist zur Zusammenwirkung mit einem dem Zugbolzen zugeordneten Indikator, so dass durch diese Ausführungsform die Möglichkeit besteht, die Verstellung des Zugbolzens zum Einleiten der Spannkraft zu überwachen.

Eine weitere alternative Ausführungsform ist dadurch gekennzeichnet, dass die Betätigungseinheit eine Drehführung mit einer der Maschinenspindel verbundene Verteilerwelle und einem drehfesten, Druckmittelanschlüsse tragenden Verteilergehäuse aufweist, wobei die Druckmittelanschlüsse der Beaufschlagung der beiden Seiten eines in einer Kolbenkammer angeordneten, mit dem Zugbolzen gekoppelten Kolben dienen. Bei dieser Ausführungsform ist zu beachten, dass eine berührungslos wirkende Kopplung des Zugbolzens gegenüber der Betätigungseinrichtung in keinen Betriebszustand, also weder beim Spannen, Lösen oder beim Arbeitseinsatz gegeben ist, dass aber entsprechend den eingangs dargelegten Anforderungen die Betätigungseinheit kraftschlüssig in der Spannstellung von dem Zugbolzen entkoppelt ist, also die Druckmittelanschlüsse nur zum Schalten mit Druck beaufschlagt werden, während diese für den Betrieb drucklos geschaltet sind, da insbesondere die Dichtungen bei den hohen gewünschten, bis zu 120000 Umdrehungen pro Minute reichenden Drehzahlen unter Druckbelastung einem erhöhten Verschleiß unterliegen.

Nach einer weiteren Ausführungsform ist vorgesehen, daß an der Maschinenspindel ein Spindelbund mit einer in Umfangsrichtung verlaufenden Aufnahme ausgebildet ist, in die zur Spindelentlastung beim Spannen und Lösen mindestens zwei diametral gegenüberliegende Zapfen eingreifen, die an der axial verschiebbaren Zylinderwand der Betätigungseinheit ausgebildet sind, wobei der Zylinderwand zur Mittenstellung der Zapfen nach dem Spannen und Lösen zwei in die beiden Verstellrichtungen wirkende, am Gehäuse abgestützte Federn zugeordnet sind.

Alternativ oder auch ergänzend besteht die Möglichkeit, daß der Zylinderwand zur Mittenstellung der Zapfen nach dem Spannen und Lösen eine Trichterfläche und dem Gehäuse ein Zentrierglied zugeordnet ist, wobei in einfachster Ausführung das Zentrierglied durch eine federbeaufschlagte Kugel gebildet ist.

Ebenso kann aber das Zentrierglied auch durch einen druckmittelbeaufschlagbaren Konuszapfen gebildet sein.

Eine weitere Ausführungsform mit zwei der Betätigungsvorrichtung zugeordneten Kolben ist dadurch gekennzeichnet, daß der erste Kolben dem Spannvorgang zugeordnet ist und den Ringbund beim Spannen beaufschlagt, und daß in der Betätigungseinheit ein vom ersten Kolben unabhängig verstellbarer Lösekolben angeordnet ist, der den Ringbund beim Lösen beaufschlagt.

Im folgenden wird die Erfindung an in der Zeichnung dargestellten Ausführungsbeispielen näher erläutert; es zeigen:
- Fig. 1: einen Längsschnitt durch die durch die Betätigungseinheit zu schaltende Spannvorrichtung,
- Fig. 2: einen Längsschnitt durch die schematische Darstellung einer Betätigungseinheit in einer ersten Ausführungsform,
- Fig. 3: eine der Figur 2 entsprechende Darstellung einer Betätigungseinheit in einer zweiten Ausführungsform,
- Fig. 4: eine der Figur 2 entsprechende Darstellung einer Betätigungseinheit in einer weiteren Ausführungsform,
- Fig. 5: eine der Figur 3 entsprechende Darstellung mit einer Spindelentlastung,
- Fig. 6: eine der Figur 5 entsprechende Darstellung mit einer alternativen Ausführungsform der Spindelentlastung, und
- Fig. 7: eine nochmals weitere Ausführungsform einer Betätigungseinheit mit zwei Kolben.

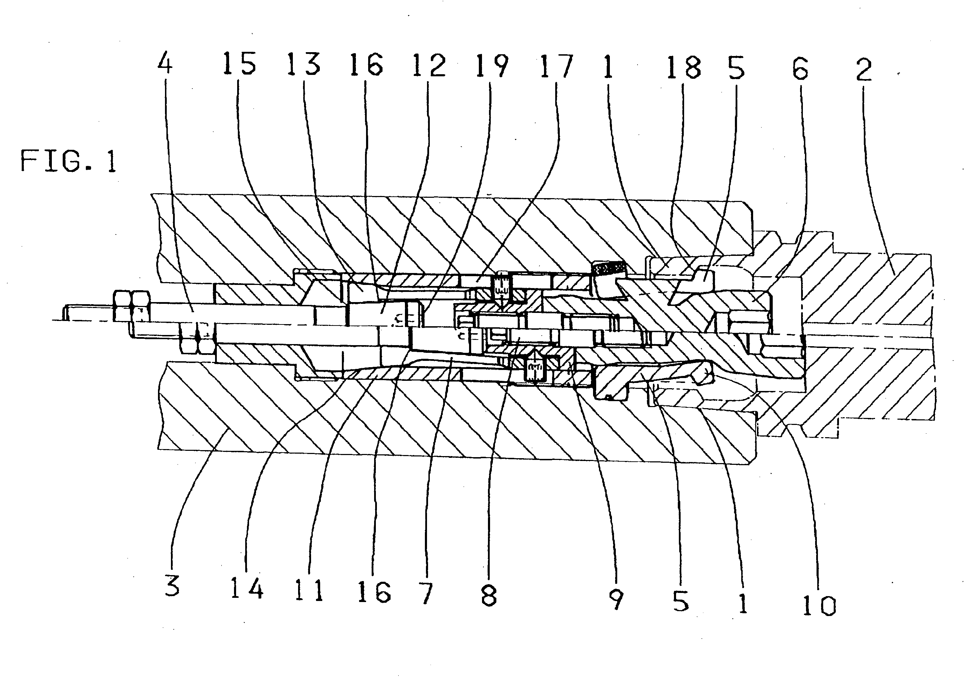

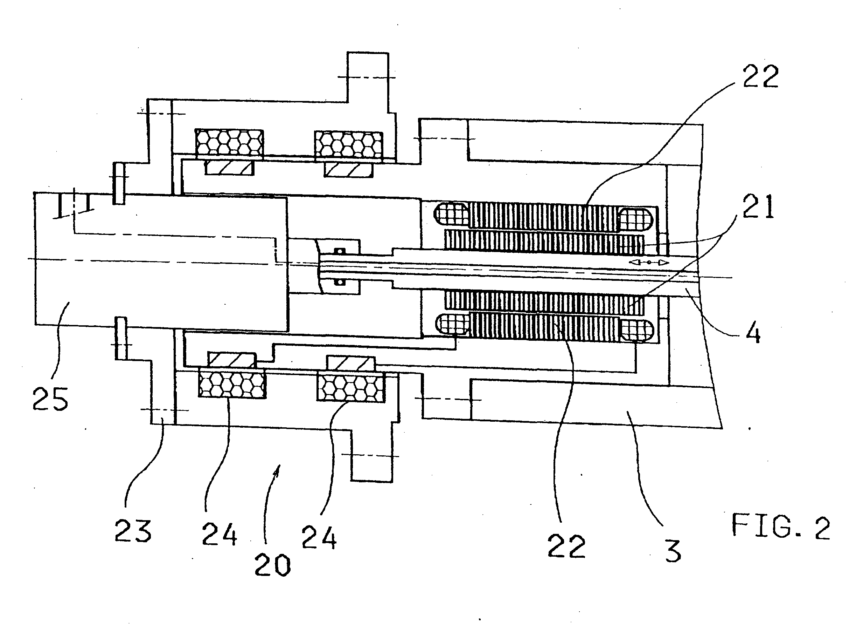

In der Zeichnung ist eine Spannvorrichtung dargestellt, die zum Spannen eines einen Hohlschaftkegel 1 aufweisenden Werkstücks 2 oder Werkzeugs dient, wozu die Spannvorrichtung einen in einem Grundkörper 3 axial verstellbar gelagerten Zugbolzen 4 aufweist, der zur Betätigung eines mit Spannklauen 5 zusammenwirkenden Spannkopfes 6 vorgesehen ist, nämlich durch eine axiale Verstellung des Zugbolzens 4 zwischen einer Lösestellung, die in der Fig. 1 in der unteren Hälfte dargestellt ist, und einer in der oberen Hälfte der Fig. 1 dargestellten Spannstellung. Zum Spannen des Werkstücks 2 wird der Zugbolzen 4 aus der Lösestellung in die Spannstellung gezogen durch eine in der Zeichnung in den Fig. 2-4 dargestellte, nachfolgend näher zu erläuternde Betätigungseinheit 20, wobei vermittelt über eine Schleppzange 7 und einen Gewindebolzen 8 sowie einen Gewindering 9 der Spannkopf 6 axial verstellt wird und dadurch radial die Klauenköpfe 10 der Spannklauen 5 verstellt zur Anlage an den Hohlschaftkegel 1.

Beachtenswert bei der in der Fig. 1 dargestellten Spannvorrichtung ist, dass in dem Grundkörper 3 axial unverschieblich eine.Spannhülse 11 angeordnet ist, an der die Schleppzange 7 axial geführt ist, die mit ihrer Innenseite am Zugbolzen 4 anliegt, wobei der Zugbolzen 4 einen Konuskopf 12, die Schleppzange 7 einen Keilring 13 und die Spannhülse 11 einen Innenkonus 14 aufweist, so dass im Ergebnis bei der Verstellung des Zugbolzens 4 aus der Lösestellung in die Spannstellung Selbsthemmung eintritt, die die axiale Lage der Schleppzange 7 bestimmt, auch ohne daß von der Betätigungseinrichtung weiterhin eine Zugkraft auf den Zugbolzen 4 ausgeübt wird. Die von der Betätigungseinheit 20 über den Zugbolzen 4 eingeleitete Kraft wird daher mittels der Selbsthemmung quasi gespeichert und die sichere Einspannung des Werkstücks 2 an seinem Hohlschaftkegel 1 ist gewährleistet, ohne daß dazu die Kraft einer Spannfeder ausgenutzt werden muss, die in der Spannstellung die axiale Lage des Zugbolzens 4 mit ihrer Federkraft gegenüber dem Grundkörper 3 oder der Spannhülse 11 gewährleisten müßte. Die Sicherheit der Einspannung ist daher durch eine Ermüdung der Spannfeder nicht gefährdet. Darüber hinaus wird durch den Einsatz der Selbsthemmung erreicht, dass der nicht von der Spannfeder beaufschlagte Zugbolzen 4 mit der kompletten Spindel bzw. den Grundkörper 3 rotieren kann, ohne in Verbindung mit seiner Betätigungseinheit 20 stehen zu müssen, so dass die Auswuchtqualität verbessert ist und die Drehzahl erhöht werden kann.

Aus der Zeichnung ist weiterhin ersichtlich, dass der Konuskopf 12 sich mit einem radialen Absatz 15 zum Zugbolzen 4 verjüngt, dass die Schleppzange 7 einen Innenbund 16 zur Anlage an den Absatz 15 aufweist und daß die Schleppzange 7 mit ihrem Innenbund 16 im axialen Bereich des Innenkonus 14 der Spannhülse 11 dem Absatz 15 ausweichen kann. Bei dem in der Zeichnung dargestellten Ausführungsbeispiel weist der Konuskopf 12 einen Konuswinkel von 6° auf, während der Innenkonus 14 der Spannhülse 11 einen Konuswinkel von 12° besitzt. Die Neigung der Innenumfangsfläche sowie der Außenumfangsfläche des Keilrings 13 korrespondiert mit der Neigung der entsprechend anliegenden Bauteile.

Im folgenden wird die Funktionsweise der Vorrichtung kurz geschildert. Ausgehend von der in der unteren Hälfte dargestellten Lösestellung wird durch die Betätigungseiheit 20 auf den˙ Zugbolzen 4 eine Zugkraft ausgeübt, durch die der Zugbolzen 4 in der Zeichnung nach links verstellt wird. Bei dieser Verstellung nimmt der Zugbolzen 4 durch die Anlage des Innenbundes 16 der Schleppzange 7 an dem Absatz des Zugbolzens 4 zunächst die Schleppzange 7, die zur Vermeidung einer Unwucht in zwei Langlöchern 17 gegenüber der Spannhülse geführt ist, und vermittelt über den Gewindebolzen 8 den Gewindering 9 den Spannkopf 6 mit, der bewirkt, dass die Spannklauen 5 mit ihrem Klauenköpfen 10 radial nach außen verschwenken und zur Anlage an die Hinterschneidung 18 des Hohlschaftkegels 1 gelangen. Durch das Zusammenwirken des Absatzes 15 mit dem Innenbund 16 wird also eine schnelle axiale Verstellung des Spannkopfes 6 erreicht, während nach Erreichen eines vorbestimmten zurückgelegten axialen Weges der Innenbund 16 der Schleppzange 7 dem Absatz 15 ausweichen kann und mit der Innenumfangsfläche des Keilringes 13 an dem Konuskopf 12 zur Anlage kommt und zugleich mit der Außenumfangsfläche gegen den Keilring 13 der Spannhülse 11 gepresst wird. Bei fortgesetzter axialer Verstellung der Zugbolzens 4 wird dadurch die Schleppzange 7 nur noch geringfügig in axialer Richtung mitgeschleppt, dafür aber mit gesteigerter Kraft zwischen dem Konuskopf 12 und der Spannhülse 11 verkeilt bis Selbsthemmung erreicht ist, die die erzielte Spannkraft auch dann bereitstellt, wenn die Zugkraft der Betätigungseinheit 20 von dem Zugbolzen 4 abgetrennt wird.

Soll nunmehr die Einspannung gelöst werden, wird der Zugbolzen 4 von der Spannstellung in die Lösestellung von links nach rechts verstellt, wodurch die Klemmung der Schleppzange 7 zwischen dem Konuskopf 12 und der Spannhülse 11 gelöst wird und der Zugbolzen 4 sich auch relativ zu der Schleppzange 7 verstellt, bis dieser mit seiner Anlagefläche 19 an dem Gewindering 9 zur Anlage kommt und der Innenbund 16 den Absatz 15 des Zugbolzens 4 wieder hintergreifen kann. Die fortgesetzte Verstellung des Zugbolzens 4 bewirkt die Verschiebung des Spannkopfes 6, so dass die Spannklauen 5 mit ihren Klauenköpfen 10 das Werkstück 2 freigeben.

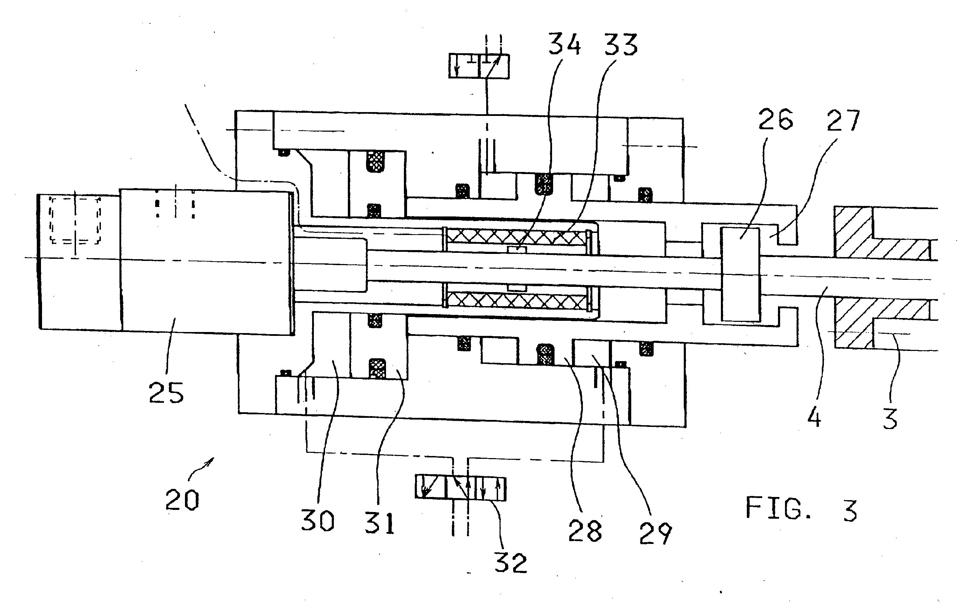

Das Spannen und Lösen dieser Spannvorrichtung kann wahlweise durch eine der aus den Figuren 2 bis 4 ersichtlichen Betätigungseinheiten 20 erfolgen, die sich übereinstimmend dadurch auszeichnen, dass in der Spannstellung des Zugbolzens 4 die Kraftübertragungskette von der Betätigungseinheit 20 zu dem Zugbolzen 4 unterbrochen ist. Dies wird bei den Ausführungsformen der Figuren 2 und 3 dadurch erreicht, dass die Betätigungseinheiten 20 in der Spannstellung des Zugbolzens 4 gegenüber diesem berührungslos positioniert sind, wobei im Falle der Ausführungsform aus Figur 2 dem Zugbolzen 4 eine erste Spulenwicklung 21 zugeordnet ist, die zum Zusammenwirken mit einer der Maschinenspindel 3 zugeordneten, koaxial zur ersten Spulenwicklung 21 angeordneten zweiten Spulenwicklung 22 vorgesehen ist, die berührungslos mit einem dem stationären Betätigungsgehäuse 23 zugeordneten Stator 24 gekoppelt ist.

Diese Betätigungseinheit 20 wirkt in sämtlichen Betriebssituationen berührungslos auf den Zugbolzen 4 ein, also sowohl beim Spannen und Lösen als auch während des Arbeitseinsatzes der Spannvorrichtung, wenn diese mit der Maschinenspindel 3 mit hohen Drehzahlen rotiert.

Figur 3 zeigt eine Ausführungsform, bei der der Zugbolzen 4 einen Ringbund 26 aufweist, der in einer Kolbenkammer 27 eines ersten Kolbens 28 angeordnet ist, der in einer mittels eines Druckmittel beaufschlagbaren Zylinderkammer 29 der Betätigungseinheit angeordnet ist, wobei der Verstellweg des ersten Kolbens 28 in der Zylinderkammer 29 aus der Mittenstellung in beide Richtungen größer ist als der Verstellweg des Ringbundes 26 in der Kolbenkammer 27 in beide Verstellrichtungen, so dass neben der Verstellung des ersten Kolbens 28 zur Anlage des Ringbundes 26 an die axiale Stirn- und Rückfläche der Kolbenkammer auch die fortgesetzte Verstellung zur Betätigung des Spannkopfes 6 erzwungen werden kann. Damit aber mit der gebotenen Sicherheit der Kontakt zu den Stirn- und Rückflächen der Kolbenkammer 27 für den Ringbund 26 wieder gelöst ist, wenn der Zugbolzen 4 nach Erreichen der Selbsthemmung seine Arbeitsstellung eingenommen hat, ist in der Betätigunseinheit 20 in einer zweiten Zylinderkammer 30 ein zweiter Kolben 31 angeordnet, der in der Spannstellung des Zugbolzens 4 den ersten Kolben 28 beaufschlagt, wobei der zweite Kolben 31 einen größeren wirksamen Durchmesser als der erste Kolben 28 hat und über ein Drei-Wegeventil 32 die einander abgewandten Seiten des ersten Kolbens 28 und des zweiten Kolbens 31 in der Spannstellung des Zugbolzens 4 mit dem gleichen Druck beaufschlagt sind, so dass über die größere wirksame Fläche des zweiten Kolbens 31 dessen Anlage am ersten Kolben 28 gewährleistet und die Anlage des zweiten Kolbens 31 an der Stirnfläche der zweiten Zylinderkammer 30 sichergestellt ist, die die Mittenstellung des Ringbundes 26 bewirkt. Bei dieser Ausführungsform ist weiterhin der Betätigungseinheit 20 zur Hubkontrolle ein Ringsensor 33 zugeordnet zum Zusammenwirken mit einem dem Zugbolzen zugeordneten Indikator 34.

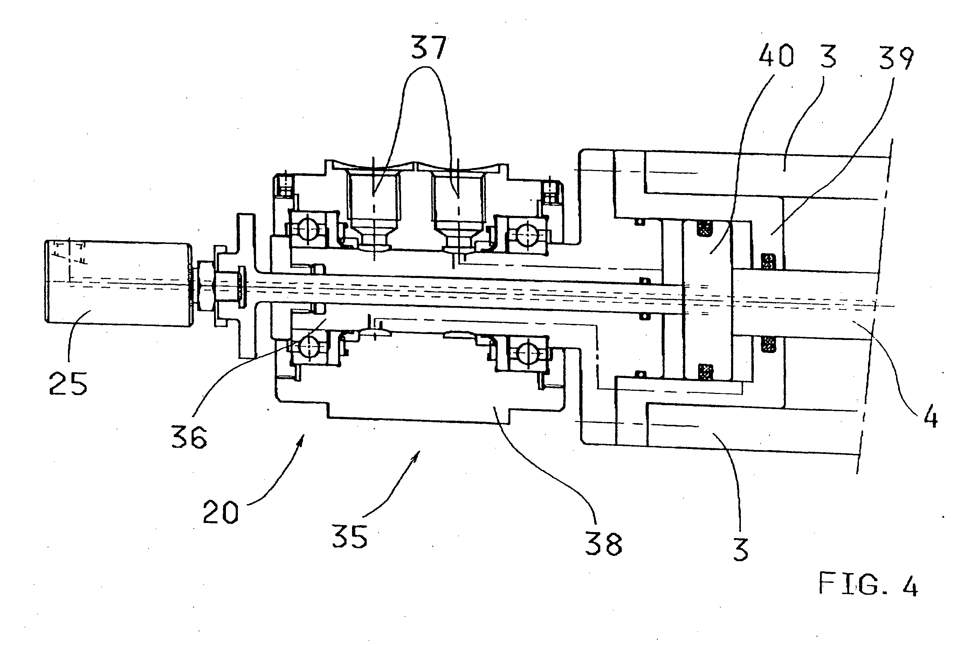

In der Figur 4 ist eine weitere Ausführungsform gezeigt, bei der die Betätigungseinheit 20 eine Drehdurchführung 35 mit einer mit der Maschinenspindel 3 verbundenen Verteilerwelle 36 und einen drehfesten, Druckmittelanschlüsse 37 tragenden Verteilergehäuse 38 aufweist, wobei die Druckmittelanschlüsse 37 der Beaufschlagung der beiden Seiten eines in einer Kammer 39 angeordneten, mit dem Zugbolzen 4 gekoppelten Kolbens 40 dienen, wobei bei dieser Ausführungsform Berührungslosigkeit des Zugbolzens 4 gegenüber der Betätigungseinheit 20 in keinem Betriebzustand gegeben ist, wohl aber die gewünschte Unterbrechung der Kraftübertragungskette beim Arbeitseinsatz der Spannvorrichtung, da nach dem Erreichen der Selbsthemmung die Druckmittelanschlüsse 37 drucklos geschaltet werden können.

Bei allen Ausführungsformen aus den Fig. 2 bis 7 ist der Betätigungseinheit 20 weiterhin an ihrem axialen Ende eine Zuführung 25 zugeordnet, die dem Durchleiten von Luft oder einem Kühlmittel zum Zugbolzen 4 in die Spannvorrichtung dienen kann.

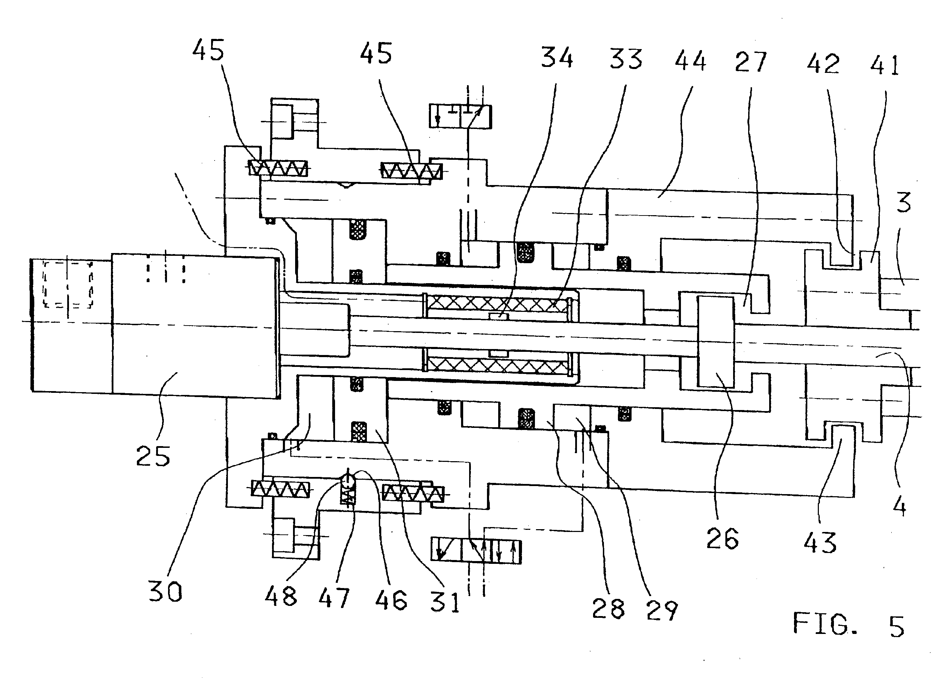

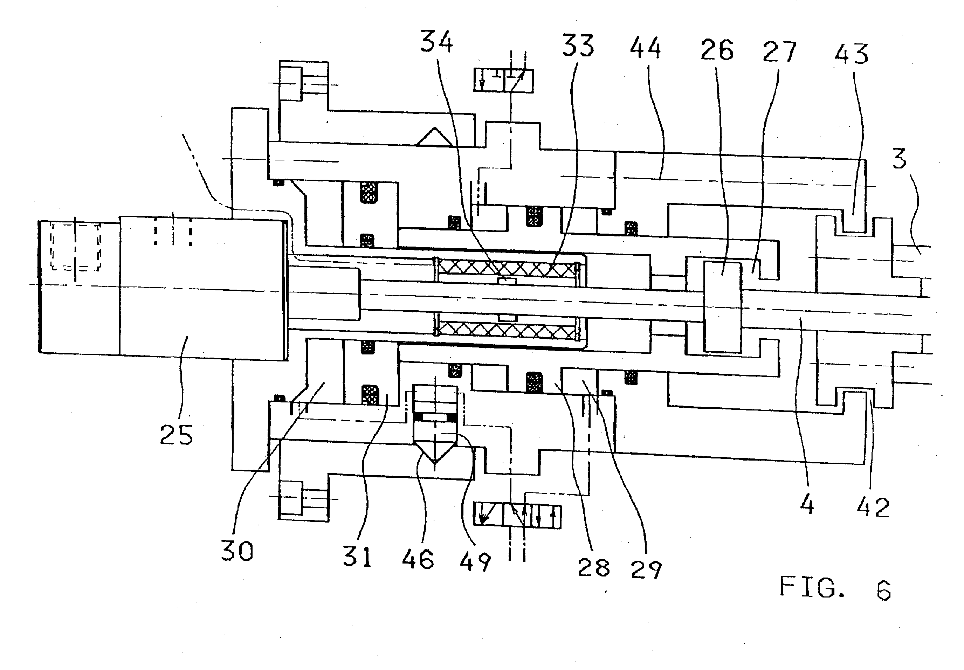

Die Figur 5 zeigt eine Ausführungsform, bei der an der Maschinenspindel 3 ein Spindelbund 41 mit einer in Umfangsrichtung verlaufenden Aufnahme '42 ausgebildet ist, in die zur Spindelentlastung beim Spannen und Lösen mindestens zwei diametral gegenüberliegende Zapfen 43 eingreifen, die an der axial verschiebbaren Zylinderwand 44 der Betätigungseinheit 20 ausgebildet sind, wobei der Zylinderwand 44 zur Mittenstellung der Zapfen 43 nach dem Spannen und Lösen zwei in die beiden Verstellrichtungen wirkende, am Gehäuse abgestützte Federn 45 zugeordnet sind; demgegenüber zeigt Figur 6 die auch zur Unterstützung nutzbare Alternative, bei der der Zylinderwand 44 zur Mittenstellung der Zapfen 43 nach dem Spannen und Lösen eine Trichterfläche 46 und dem Gehäuse ein Zentrierglied 47 zugeordnet ist, das entweder durch eine federbeaufschlagte Kugel 48 (Figur 5) oder durch einen druckmittelbeaufschlagbaren Konuszapfen 49 gebildet ist.

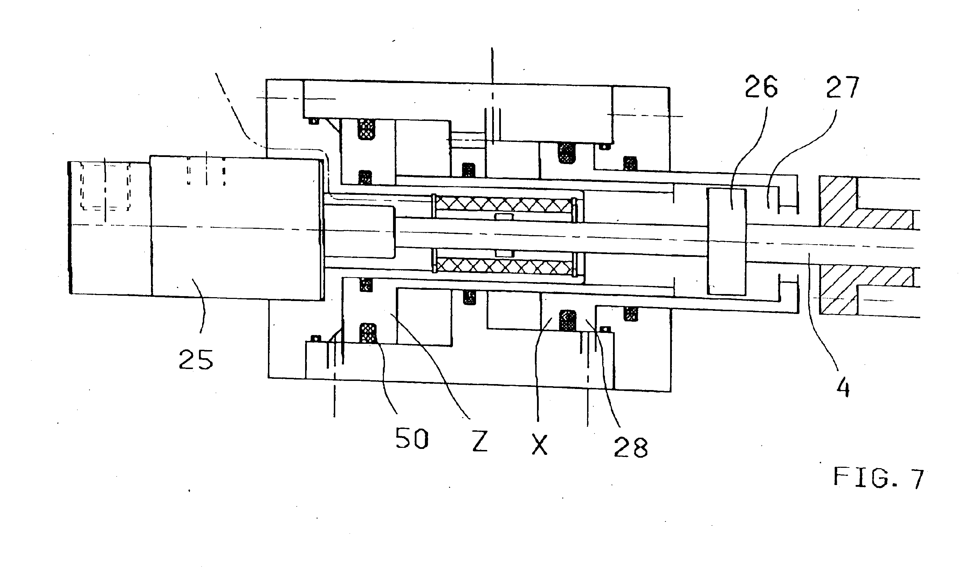

Figur 7 schließlich zeigt ein Beispiel, bei dem zwar der Betätigungseinheit 20 zwei Kolben zugeordnet sind, die aber nicht unabhängig agieren, nämlich indem der erste Kolben 28 dem Spannvorgang zugeordnet ist und den Ringbund 26 beim Spannen beaufschlagt und in der Betätigungseinheit 20 ein vom ersten Kolben 28 unabhängig verstellbarer Lösekolben 50 angeordnet ist, der den Ringbund 26 beim Lösen beaufschlagt.

## Patentansprüche

1. Vorrichtung zur Durchführung eines Verfahrens zum Betrieb einer Betätigungseinheit (20), die dem Spannen und Lösen einer Spannvorrichtung mit einem in einer Maschinenspindel (3) axial verstellbaren Zugbolzen zur Betätigung eines mit Spannklauen (5) zusammenwirkenden Spannkopfes (6) dient, wobei anfänglich durch die Betätigungseinheit (20) zum Spannen in einer axialen Spannrichtung eine Kraft auf den Zugbolzen (4) ausgeübt wird, bis dessen axiale Lage mittels Selbsthemmung gegenüber der Maschinenspindel (3) festgelegt ist, bei dem nach dem Erreichen der Selbsthemmung die Kraftwirkung in Spannrichtung der Betätigungseinheit (20) auf den Zugbolzen (4) beendet wird und während des Arbeitseinsatzes der Spannvorrichtung unterbunden bleibt, und bei dem zum Lösen der Einspannung der Zugbolzen (4) durch die Betätigungseinheit (20) in die der Spannvorrichtung entgegengesetzte Lösevorrichtung verstellt wird, wobei eine Spannvorrichtung mit dem in der Maschinenspindel (3) axial verstellbar gelagerten Zugbolzen (4) zur Betätigung eines mit Spannklauen (5) zusammenwirkenden Spannkopfes (6) vorgesehen ist, bei der die axiale Lage des Zugbolzens (4) in der Spannstellung durch Selbsthemmung gesichert ist und eine Betätigungseinheit (20) vorgesehen ist, die in der Spannstellung des Zugbolzens (4) kraftschlüssig von diesem entkoppelt ist, wobei die Betätigungseinheit (20) in der Spannstellung des Zugbolzens (4) gegenüber diesem berührungslos positioniert ist, **dadurch gekennzeichnet, dass** dem Zugbolzen (4) eine erste Spulenwicklung (21) zugeordnet ist, die zum Zusammenwirken mit einer der Maschinenspindel (3) zugeordneten, koaxialen zur ersten Spulenwicklung (21) angeordneten, zweiten Spulenwicklung (22) vorgesehen ist, wobei die zweite Spulenwicklung (22) berührungslos mit einem dem stationären Betätigungsgehäuse (23) zugeordneter Stator (24) gekoppelt ist, so dass ein Linearmotor realisiert ist, bei dem durch unterschiedliche Stromrichtung die Verstellung des Zugbolzens in die Spannrichtung oder die Löserichtung bewirkt werden kann.

2. Vorrichtung zur Durchführung eines Verfahrens zum Betrieb einer Betätigungseinheit (20), die dem Spannen und Lösen einer Spannvorrichtung mit einem in einer Maschinenspindel (3) axial verstellbaren Zugbolzen zur Betätigung eines mit Spannklauen (5) zusammenwirkenden Spannkopfes (6) dient, wobei anfänglich durch die Betätigungseinheit (20) zum Spannen in einer axialen Spannrichtung eine Kraft auf den Zugbolzen (4) ausgeübt wird, bis dessen axiale Lage mittels Selbsthemmung gegenüber der Maschinenspindel (3) festgelegt ist, bei dem nach dem Erreichen der Selbsthemmung die Kraftwirkung in Spannrichtung der Betätigungseinheit (20) auf den Zugbolzen (4) beendet wird und während des Arbeitseinsatzes der Spannvorrichtung unterbunden bleibt, und bei dem zum Lösen der Einspannung der Zugbolzen (4) durch die Betätigungseinheit (20) in die der Spannvorrichtung entgegengesetzte Lösevorrichtung verstellt wird, wobei eine Spannvorrichtung mit dem in der Maschinenspindel (3) axial verstellbar gelagerten Zugbolzen (4) zur Betätigung eines mit Spannklauen (5) zusammenwirkenden Spinnkopfes (6) vorgesehen ist, bei der die axiale Lage des Zugbolzens (4) in der Spannstellung durch Selbsthemmung gesichert ist und eine Betätigungseinheit (20) vorgesehen ist, die in der Spannstellung des Zugbolzens (4) kraftschlüssig von diesem entkoppelt ist, wobei die Betätigungseinheit (20) in der Spannstellung des Zugbolzens (4) gegenüber diesem berührungslos positioniert ist, wobei der Zugbolzen (4) einen Ringbund (26) aufweist, der in einer Kolbenkammer (27) eines ersten Kolbens (28) angeordnet ist, der in einer mittels eines Druckmittels beaufschlagbaren Zylinderkammer (29) der Betätigungseinheit (20) angeordnet ist, der Verstellweg des ersten Kobens (28) in der Zylinderkammer (29) aus der Mittenstellung in beide Richtungen größer ist als der Verstellweg des Ringbundes (26) in der Kolbenkammer (27) in beide Verstellrichtungen, wobei in der Betätigungse in heit (20) in einer zweiten Zylinderkammer (30) ein zweiter Kolben (31) angeordnet ist, der in der Spannstellung des Zugbolzens (4) den ersten Kolben (28) beaufschlagt, **dadurch gekennzeichnet, dass** der zweite Kolben (31) einen größeren wirksamen Durchmesser als der erste Koben (28) hat, und dass über ein Orei-Wegeventil (32) die einander abgewandten Seiten des ersten Kolbens (28) und des zweiten Kobens (31) in der Spannstellung des Zugbolzen (4) mit dem gleichen Druck beaufschlagt sind.

3. Vorrichtung nach Anspruch 1 oder 2, **dadurch gekennzeichnet, dass** der Betätigungseinheit (20) zur Hubkontrolle ein Ringsensor (33) zugeordnet ist zur Zusammenwirkung mit einem dem Zugbolzen (4) zugeordneten indikator (34).

4. Vorrichtung nach Anspruch 1 oder 2, **dadurch gekennzeichnet, dass** die Betätigungseinheit (20) eine Drehdurchführung (35) mit einer mit der Maschinenspindel (3) verbundenen Verteilerwelle (36) und einem drehfesten, Druckmittelanschlüsse (37) tragenden Verteilergehäuse (38) aufweist, wobei die Druckmittelanschlüsse (37) der Beaufschlagung der beiden Seiten eines in einer Kammer (39) angeordneten, mit dem Zugbolzen (4) gekoppelten Kolbens (40) dienen.

5. Vorrichtung nach einem der Ansprüche 2 bis 4. **dadurch gekennzeichnet, dass** an der Maschinenspindel (3) ein Spindelbund (41) mit einer in Umfangsrichtung verlaufenden Aufnahme (42) ausgebildet ist, in die zur Spindelentlastung beim Spannen und Lösen mindestens zwei diametral gegenüberliegende Zapfen (43) eingreifen, die an der axial verschiebbaren Zylinderwand (44) der Betätigungseinheit (20) ausgebildet sind.

6. Vorrichtung nach Anspruch 5, **dadurch gekennzeichnet, dass** der Zylinderwand (44) zur Mittenstellung der Zapfen (43) nach dem Spannen und Lösen zwei in die beiden Verstellrichtungen wirkende, am Gehäuse abgestützte Federn (45) zugeordnet sind.

7. Vorrichtung nach Anspruch 5 oder 6, **dadurch gekennzeichnet, dass** der Zylinderwand (44) zur Mittenstellung der Zapfen (43) nach dem Spannen und Lösen eine Trichterfläche (46) und dem Gehäuse ein Zentrierglied (47) zugeordnet ist.

8. Vorrichtung nach Anspruch 7, **dadurch gekennzeichnet, dass** das Zentrierglied (47) durch eine federbeaufschlagte Kugel (48) gebildet ist.

9. Vorrichtung nach Anspruch 7, **dadurch gekennzeichnet, dass** das Zentrierglied (47) durch einen druckmittelbeaufschlagbaren Konuszapfen (49) gebildet ist.

10. Vorrichtung nach Anspruch 2, **dadurch gekennzeichnet, dass** der erste Kolben (28) dem Spannvorgang zugeordnet ist und den Ringbund (26) beim Spannen beaufschlagt, und dass in der Betätigungseinheit (20) ein vom ersten Kolben (28) unabhängig verstellbarer Lösekolben (50) angeordnet ist, der den Ringbund (26) beim Lösen beaufschlagt.

## Claims

1. A device for carrying out a method of operating an actuating unit (20) which serves to clamp and release a clamping device having a pull rod axially displaceable in a machine spindle (3) for actuation of a clamping head (6) co-operating with clamping jaws (5), wherein initially a force is exerted on the pull rod (4) by the actuating unit (20) in an axial clamping direction for clamping until the axial position of the pull rod is fixed relative to the machine spindle (3) by means of a self-locking action, in which after self-locking is established the action of the force in the clamping direction of the actuating unit (2) on the pull rod (4) is terminated and remains terminated during the operating use of the clamping device, and in which to release the clamping action the pull rod (4) is displaced by the actuating unit (20) in the release direction opposite to the clamping direction, wherein there is provided a clamping device with the pull rod (4) mounted axially displaceably in the machine spindle (3) for actuating a clamping head (6) co-operating with clamping jaws (5), in which the axial position of the pull rod (4) is secured in the clamping position by self-locking and there is provided an actuating unit (20) which in the clamping position of the pull rod (4) is uncoupled therefrom in force-locking relationship, wherein the actuating unit (20) in the clamping position of the pull rod (4) is positioned in contact-less relationship with respect thereto, **characterised in that** associated with the pull rod (4) is a first coil winding (21) which is provided for co-operating with a second coil winding (22) which is associated with the machine spindle (3) and is arranged coaxially with respect to the first coil winding (21), wherein the second coil winding (22) is coupled in contact-less relationship to a stator (24) associated with the stationary actuating housing (23), so that there is provided a linear motor in which displacement of the pull rod in the clamping direction or the release direction can be implemented by a different direction of current.

2. A device for carrying out a method of operating an actuating unit (20) which serves to clamp and release a clamping device having a pull rod axially displaceable in a machine spindle (3) for actuation of a clamping head (6) co-operating with clamping jaws (5), wherein initially a force is exerted on the pull rod (4) by the actuating unit (20) in an axial clamping direction for clamping until the axial position of the pull rod is fixed relative to the machine spindle (3) by means of a self-locking action, in which after self-locking is established the action of the force in the clamping direction of the actuating unit (2) on the pull rod (4) is terminated and remains terminated during the operating use of the clamping device, and in which to release the clamping action the pull rod (4) is displaced by the actuating unit (20) in the release direction opposite to the clamping direction, wherein there is provided a clamping device with the pull rod (4) mounted axially displaceably in the machine spindle (3) for actuating a clamping head (6) co-operating with clamping jaws (5), in which the axial position of the pull rod (4) is secured in the clamping position by self-locking and there is provided an actuating unit (20) which in the clamping position of the pull rod (4) is uncoupled therefrom in force-locking relationship, wherein the actuating unit (20) in the clamping position of the pull rod (4) is positioned in contact-less relationship with respect thereto, wherein the pull rod (4) has an annular collar (26) arranged in a piston chamber (27) of a first piston (28) arranged in a cylinder chamber (29) of the actuating unit (20), which cylinder chamber (29) can be acted upon by means of a pressure medium, the displacement travel of the first piston (28) in the cylinder chamber (29) from the central position in both directions is greater than the displacement travel of the annular collar (26) in the piston chamber (27) in both displacement directions, wherein arranged in the actuating unit (20) in a second cylinder chamber (30) is a second piston (31) which in the clamping position of the pull rod (4) acts on the first piston (28), **characterised in that** the second piston (31) is of a larger effective diameter than the first piston (28) and that the mutually remote sides of the first piston (28) and the second piston (31) in the clamping position of the pull rod (4) are acted upon with the same pressure by way of a three-way valve (32).

3. A device according to claim 1 or claim 2 **characterised in that** associated with the actuating unit (20) for stroke control is a ring sensor (33) for co-operating with an indicator (34) associated with the pull rod (4).

4. A device according to claim 1 or claim 2 **characterised in that** the actuating unit (20) has a rotary transfer union (35) having a distributor shaft (36) connected to the machine spindle (3) and a non-rotatable distributor housing (38) carrying pressure medium connections (37), wherein the pressure medium connections (37) serve for acting on the two sides of a piston (40) arranged in a chamber (39) and coupled to the pull rod (4).

5. A device according to one of claims 2 to 4 **characterised in that** provided on the machine spindle (3) is a spindle collar (41) having a peripherally extending receiving means (42) into which at least two diametrally opposite pins (43) engage for spindle relief upon clamping and release, which pins are provided at the axially displaceable cylinder wall (44) of the actuating unit (20).

6. A device according to claim 5 **characterised in that** two springs (45) acting in the two displacement directions and supported on the housing are associated with the cylinder wall (34) for central positioning of the pins (43) after clamping and release.

7. A device according to claim 5 or claim 6 **characterised in that** a funnel-shaped surface (46) is associated with the cylinder wall (44) and a centering member (47) is associated with the housing for central positioning of the pins (43) after clamping and release.

8. A device according to claim 7 **characterised in that** the centering member (47) is formed by a spring-loaded ball (48).

9. A device according to claim 7 **characterised in that** the centering member (47) is formed by a pressure medium-actuable conical pin (49).

10. A device according to claim 2 **characterised in that** the first piston (28) is associated with the clamping process and acts on the annular collar (26) in the clamping operation and that arranged in the actuating unit (20) is a release piston (50) which is displaceable independently of the first piston (28) and which acts on the annular collar (26) in the release operation.

## Revendications

1. Dispositif pour réaliser un procédé de fonctionnement d'une unité d'actionnement (20) qui sert à serrer et desserrer un dispositif de serrage comprenant un boulon tirant mobile axialement dans une broche de machine (3) pour actionner une tête de serrage (6) qui coopère avec des griffes de serrage (5), dispositif dans lequel, pour le serrage, l'unité d'actionnement (20) exerce initialement une force dans une direction de serrage axiale sur le boulon tirant (4) jusqu'à ce que la position axiale de celui-ci par rapport à la broche de machine (3) soit fixée par autoblocage, dans lequel, après l'atteinte de l'autoblocage, l'action de la force dans la direction de serrage exercée par l'unité d'actionnement (20) sur le boulon tirant (4) cesse et reste empêchée durant l'utilisation du dispositif de serrage pour le travail, et dans lequel, pour libérer le blocage, le boulon tirant (4) est déplacé par l'unité d'actionnement (20) dans la direction de desserrage opposée à la direction de serrage, un dispositif de serrage avec le boulon tirant (4) monté de manière à présenter une mobilité axiale dans la broche de machine (3) pour actionner une tête de serrage (6) qui coopère avec des griffes de serrage (5) étant prévu, dans lequel la position axiale du boulon tirant (4) dans la position de serrage est assurée par autoblocage et une unité d'actionnement (20) est prévue, qui, dans la position de serrage du boulon tirant (4), est découplée de celui-ci par conjugaison de forces, l'unité d'actionnement (20) étant, dans la position de serrage du boulon tirant (4), positionnée sans contact par rapport à celui-ci, **caractérisé en ce qu'**au boulon tirant (4) est associé un premier bobinage (21) qui est prévu pour coopérer avec un deuxième bobinage (22) associé à la broche de machine (3) et disposé coaxialement au premier bobinage (21), le deuxième bobinage (22) étant couplé sans contact à un stator (24) associé au boîtier d'actionnement stationnaire (23), de façon à réaliser un moteur linéaire qui permet de provoquer le déplacement du boulon tirant dans la direction de serrage ou dans la direction de desserrage par une direction différente du courant.

2. Dispositif pour réaliser un procédé de fonctionnement d'une unité d'actionnement (20) qui sert à serrer et desserrer un dispositif de serrage comprenant un boulon tirant mobile axialement dans une broche de machine (3) pour actionner une tête de serrage (6) qui coopère avec des griffes de serrage (5), dispositif dans lequel, pour le serrage, l'unité d'actionnement (20) exerce initialement une force dans une direction de serrage axiale sur le boulon tirant (4) jusqu'à ce que la position axiale de celui-ci par rapport à la broche de machine (3) soit fixée par autoblocage, dans lequel, après l'atteinte de l'autoblocage, l'action de la force dans la direction de serrage exercée par l'unité d'actionnement (20) sur le boulon tirant (4) cesse et reste empêchée pendant l'utilisation du dispositif de serrage pour le travail, et dans lequel, pour libérer le blocage, le boulon tirant (4) est déplacé par l'unité d'actionnement (20) dans la direction de desserrage opposée à la direction de serrage, un dispositif de serrage avec le boulon tirant (4) monté de manière à présenter une mobilité axiale dans la broche de machine (3) pour actionner une tête de serrage (6) qui coopère avec des griffes de serrage (5) étant prévu, dans lequel la position axiale du boulon tirant (4) dans la position de serrage est assurée par autoblocage et une unité d'actionnement (20) est prévue, qui, dans la position de serrage du boulon tirant (4), est découplée de celui-ci par conjugaison de forces, l'unité d'actionnement (20) étant, dans la position de serrage du boulon tirant (4), positionnée sans contact par rapport à celui-ci, le boulon tirant (4) présentant un collet annulaire (26) disposé dans une chambre de piston (27) d'un premier piston (28) qui est disposé dans une chambre cylindrique (29) de l'unité d'actionnement (20) pouvant être soumise à un moyen de pression, la course de déplacement du premier piston (28) dans la chambre cylindrique (29) dans les deux directions à partir de la position médiane étant supérieure à la course de déplacement du collet annulaire (26) dans la chambre de piston (27) dans les deux directions de déplacement, un deuxième piston (31) étant disposé dans une deuxième chambre cylindrique (30) de l'unité d'actionnement (20), lequel agit sur le premier piston (28) dans la position de serrage du boulon tirant (4), **caractérisé en ce que** le deuxième piston (31) a un diamètre efficace supérieur à celui du premier piston (28) et **en ce que**, par l'intermédiaire d'un distributeur à trois voies (32), les côtés éloignés l'un de l'autre du premier piston (28) et du deuxième piston (31) sont soumis à la même pression dans la position de serrage du boulon tirant (4).

3. Dispositif selon la revendication 1 ou 2, **caractérisé en ce qu'**un capteur annulaire (33) prévu pour coopérer avec un indicateur (34) associé au boulon tirant (4) est associé à l'unité d'actionnement (20) pour le contrôle de la course.

4. Dispositif selon la revendication 1 ou 2, **caractérisé en ce que** l'unité d'actionnement (20) est pourvue d'un passage tournant (35) avec un arbre de distributeur (36) relié à la broche de machine (3) et avec un boîtier de distributeur (38) qui est fixe en rotation et qui porte des raccords de moyen de pression (37), les raccords de moyen de pression (37) servant à mettre en pression les deux côtés d'un piston (40) disposé dans une chambre (39) et couplé au boulon tirant (4).

5. Dispositif selon une des revendications 2 à 4, **caractérisé en ce qu'**est formé sur la broche de machine (3) un collet de broche (41) pourvu d'un logement (42) qui s'étend en direction circonférentielle et dans lequel s'engagent au moins deux tenons (43) diamétralement opposés qui servent à soulager la broche lors du serrage et du desserrage et qui sont formés sur la paroi cylindrique (44) mobile axialement de l'unité d'actionnement (20).

6. Dispositif selon la revendication 5, **caractérisé en ce que** deux ressorts (45) qui agissent dans les deux directions de déplacement et qui prennent appui sur le boîtier sont associés à la paroi cylindrique (44) pour le positionnement central des tenons (43) après le serrage et le desserrage.

7. Dispositif selon la revendication 5 ou 6, **caractérisé en ce que**, pour le positionnement central des tenons (43) après le serrage et le desserrage, une surface en forme d'entonnoir (46) est associée à la paroi cylindrique (44) et un élément de centrage (47) est associé au boîtier.

8. Dispositif selon la revendication 7, **caractérisé en ce que** l'élément de centrage (47) est formé par une bille (48) soumise à l'action d'un ressort.

9. Dispositif selon la revendication 7, **caractérisé en ce que** l'élément de centrage (47) est formé par un tenon conique (49) soumis à un moyen de pression.

10. Dispositif selon la revendication 2, **caractérisé en ce que** le premier piston (28) est associé à l'opération de serrage et agit sur le collet annulaire (26) lors du serrage, et **en ce que** dans l'unité d'actionnement (20) est disposé un piston de desserrage (50) qui est mobile indépendamment du premier piston (28) et qui agit sur le collet annulaire (26) lors du desserrage.
